Europäisches Patentamt

European Patent Office

Office européen des brevets

(11) Numéro de publication: **0 429 365 A1**

## (12) DEMANDE DE BREVET EUROPEEN

(21) Numéro de dépôt: 90403290.1

(51) Int. Cl.⁵: **G01F 11/26, B67D 3/00**

(22) Date de dépôt: **21.11.90**

(30) Priorité: **22.11.89 FR 8915354**

(43) Date de publication de la demande:
**29.05.91 Bulletin 91/22**

(84) Etats contractants désignés:
**AT BE CH DE DK ES GB GR IT LI LU NL SE**

(71) Demandeur: **WAVIN B.V.**
**Händellaan 251, Postbus 173**
**NL-8000 AD Zwolle(NL)**

(72) Inventeur: **Dautais, Jean-Pierre**
**73, rue Jean Mermoz**
**F-44340 Bouguenais(FR)**

(74) Mandataire: **Chameroy, Claude et al**
**c/o Cabinet Malemont 42, avenue du**
**Président Wilson**
**F-75116 Paris(FR)**

(54) Dispositif pour répartir un liquide dans au moins deux directions.

(57) Dispositif pour répartir un liquide dans au moins deux directions, caractérisé en ce qu'il comprend un tube réservoir (1) à vidange unilatérale, alimenté en liquide (7) par un avaloir (8) et qui est monté mobile à la fois verticalement (2) et horizontalement (3), ledit tube étant normalement maintenu dans une position haute par un lest (6) dont l'effet s'annule sous l'action du poids de liquide remplissant le tube, ce qui provoque son basculement en position basse et sa vidange, des moyens en forme de crémaillère (9, 10) étant prévus pour coopérer avec le tube à chacun de ses basculements afin d'entraîner sa rotation pas à pas dans le plan horizontal.

Application notamment au domaine de l'assainissement pour l'épandage des eaux usées.

EP 0 429 365 A1

## DISPOSITIF POUR RÉPARTIR UN LIQUIDE DANS AU MOINS DES DIRECTIONS

La présente invention concerne un dispositif pour répartir un liquide dans au moins deux directions, utilisable notamment dans le domaine de l'assainissement.

On sait que pour l'assainissement autonome des eaux usées, il est souvent nécessaire d'envoyer les eaux usées, prétraitées en fosse septique, dans l'ensemble d'un épandage souterrain. A cet effet, on utilise divers moyens, mais qui ne donnent pas entière satisfaction, soit parce qu'ils nécessitent une énergie électrique, soit encore parce qu'ils présentent des risques importants de mauvaise répartition sur les surfaces d'épandage.

La présente invention a donc pour but principal de remédier à ces inconvénients et, pour ce faire, elle a pour objet un dispositif de répartition de liquide qui se caractérise essentiellement en ce qu'il comprend un tube réservoir à vidange unilatérale, alimenté en liquide par un avaloir et qui est monté mobile à la fois verticalement et horizontalement, ledit tube étant normalement maintenu dans une position haute par un lest dont l'effet s'annule sous l'action du poids de liquide remplissant le tube, ce qui provoque son basculement en position basse et sa vidange, des moyens en forme de crémaillère étant prévus pour coopérer avec le tube à chacun de ses basculements afin d'entraîner sa rotation pas à pas dans le plan horizontal.

Grâce à cette disposition, le liquide est envoyé alternativement dans au moins deux directions différentes, sans aucun apport d'énergie électrique. De ce fait, la distribution du liquide est mieux maîtrisée et permet notamment d'alimenter les plages d'épandage avec une utilisation optimum des surfaces filtrantes.

De préférence, le dispositif selon l'invention comporte en outre un contrepoids monté mobile autour d'un axe fixe et coopérant avec deux butées solidaires du tube de vidange, afin d'accélérer les mouvements de basculement dudit tube.

En variante, le dispositif comporte un système de vidange additionnel de type venturi disposé dans le fond du tube, à l'opposé de l'orifice de vidange principal, ce qui permet d'éviter les basculements de nature volumétrique en fin d'alimentation ou pour les faibles débits d'alimentation.

Dans certains cas, l'angle de rotation du tube de vidange est limité par une position de retour direct à la position de départ.

Plusieurs formes d'exécution de l'invention sont décrites ci-après à titre d'exemples, en référence aux dessins annexés dans lesquels :

- la figure 1 est une vue de dessus schématique d'un dispositif conforme à l'invention ;
- la figure 2 est une vue en coupe verticale de ce dispositif ;
- la figure 3 est une autre vue en coupe verticale montrant le dispositif en position de fonctionnement ;
- la figure 4 est une vue latérale du même dispositif ;
- la figure 5 est une vue en coupe schématique d'une variante de réalisation du dispositif selon l'invention ;
- les figures 6 et 7 sont des vues partielles illustrant une autre variante de réalisation ; et
- les figures 8 et 9 sont des vues en plan et en coupe illustrant encore une autre variante de réalisation de l'invention.

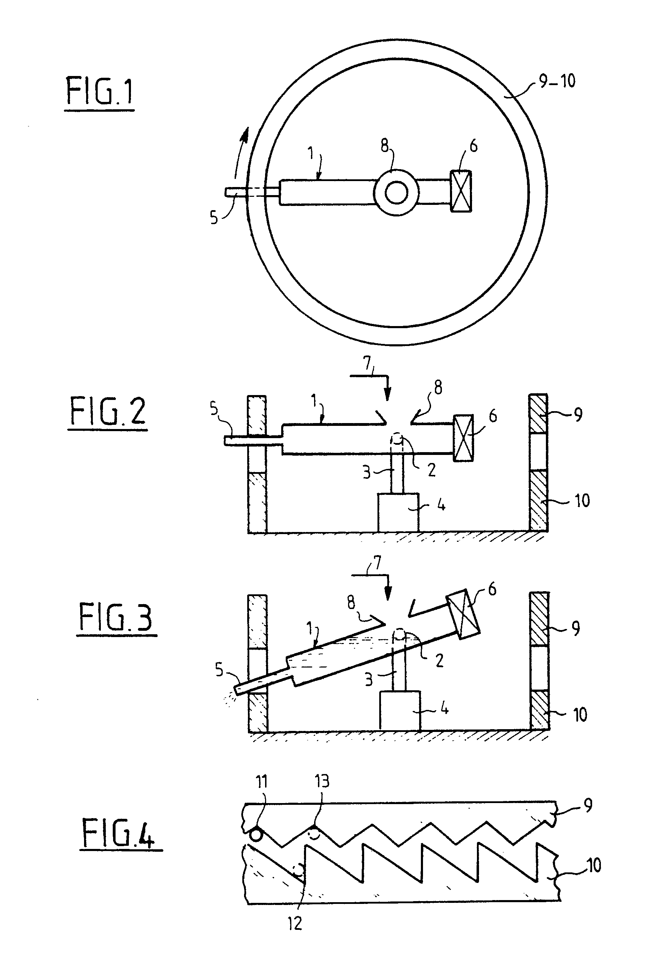

Le dispositif représenté sur les figures 1 et 2 comprend tout d'abord un tube réservoir 1, monté mobile verticalement autour d'un axe horizontal 2, mais qui peut également tourner dans le plan horizontal autour d'un axe vertical 3 supporté par un palier fixe 4. Ce tube comporte à une extrémité un orifice de vidange constitué par un embout 5 de plus petit diamètre et comporte à son autre extrémité un lest 6 qui le maintient normalement dans la position haute représentée sur la figure 2. Il est alimenté en 7 par un liquide quelconque à travers un avaloir 8 situé de préférence au niveau de l'axe 2. Ce liquide sera par exemple constitué par les eaux usées prétraitées provenant d'une fosse septique, soit directement, soit par l'intermédiaire d'un système de chasse pendulaire.

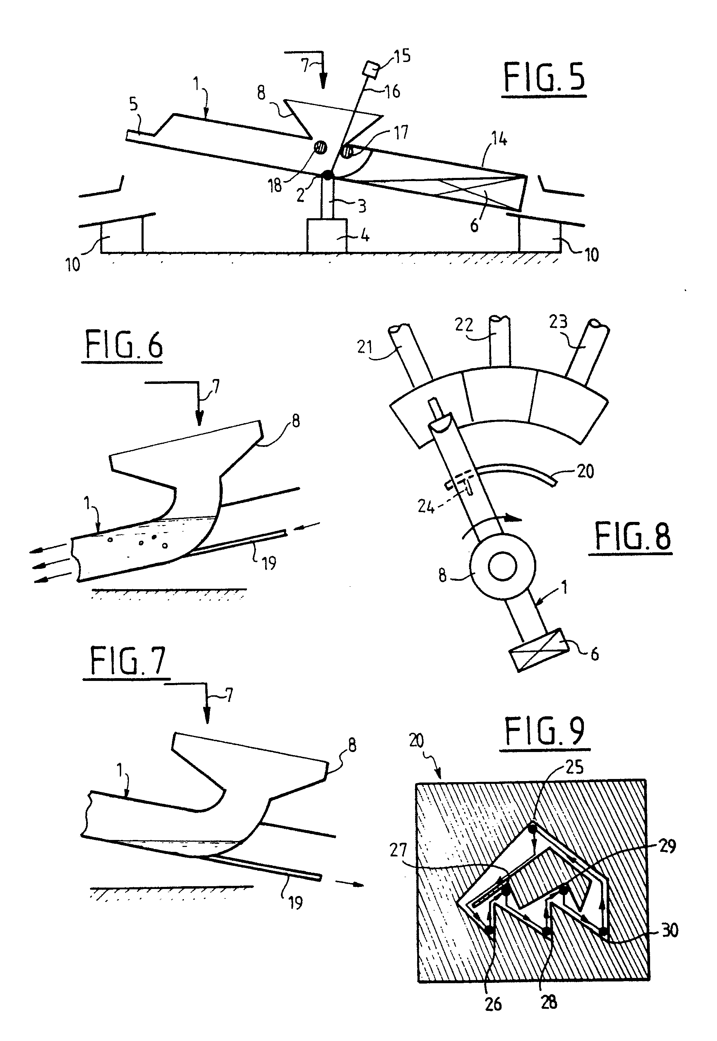

L'embout de vidange 5 constitue par ailleurs un élément de guidage coopérant avec un guide circulaire en forme de double crémaillère 9-10, entourant complètement le tube 1 et dont une partie est représentée sur la figure 4.

Lorsque du liquide est introduit dans le tube 1 par l'avaloir 8, celui-ci se remplit progressivement et le déplacement du centre de gravité qui s'ensuit annule l'effet du lest 6. Le tube 1 bascule alors brusquement en position basse, comme représenté sur la figure 3, et se vidange par l'embout 5. Ce faisant, l'embout 5 qui se trouvait en appui contre la crémaillère supérieure 9 dans la position indiquée 11, vient prendre appui contre la crémaillère inférieure 10 et se retrouve dans la position indiquée 12, ce qui entraîne une rotation du tube 1 dans le plan horizontal.

A l'arrêt de l'alimentation, le tube 1 se vide progressivement et remonte alors brusquement en position haute sous l'effet du lest 6. Ce faisant, l'embout 5 vient prendre appui à nouveau sur la crémaillère supérieure 9 et se retrouve dans la position indiquée 13, provoquant ainsi une nouvelle rotation du tube dans le plan horizontal. Le dispositif est alors prêt à effectuer un nouveau cycle.

Ce type de fonctionnement séquentiel est basé essentiellement sur une alimentation par chasse. Dans un mode d'utilisation particulier, on s'arrange pour que le débit d'alimentation soit inférieur au débit de vidange. Sous alimentation continue se met alors en place, à débits plus ou moins constants, une oscillation du tube 1 correspondant au temps de vidange en relation avec le débit d'alimentation. La vidange ainsi obtenue est pulsée, en fonction des facteurs temps et débits, et le tube 1 se déplace pas à pas, en continu, pendant toute la durée d'alimentation du dispositif.

On voit donc en définitive que le dispositif selon l'invention permet de répartir un liquide dans une multitude de directions, ce qui permet en particulier, dans le domaine de l'assainissement, de répartir les eaux usées prétraitées sur plusieurs plages d'épandage différentes afin d'optimiser l'action des surfaces filtrantes. Bien entendu, on pourra si besoin est, regrouper ou au contraire subdiviser, à volonté, certaines sorties de vidange, pour tenir compte du nombre et des dimensions respectives des surfaces filtrantes considérées.

Dans la variante de réalisation représentée sur la figure 5, plus spécialement conçu pour des débits élevés, le tube réservoir 1 a de préférence un diamètre supérieur à 100 mm. Le guide circulaire est ici limité à une crémaillère inférieure 10 coopérant à la fois avec l'embout de vidange 5 et avec le prolongement opposé 14 du tube renfermant le lest 6. Ainsi, chaque basculement du tube se traduit par un déplacement angulaire de celui-ci.

Par ailleurs, un contrepoids 15 est monté mobile autour de l'axe 2, à l'extrémité d'une tige 16 coopérant avec deux butées 17 et 18 solidaires du tube 1. L'angle de rotation du contrepoids 15, limité par les butées 17 et 18, est légèrement inférieur à celui du tube 1 et se situe de part et d'autre d'une ligne fictive perpendiculaire audit tube. Grâce à cette disposition et du fait du déplacement rapide du centre de gravité provoqué par le contrepoids 15, on obtient un basculement brusque du tube 1 en position haute ou en position basse, ce qui permet d'éviter toute pulsation dudit tube pour les faibles débits d'alimentation ou en fin de cycle d'alimentation.

En variante, on peut également utiliser un système de vidange additionnel du type venturi, comme représenté en 19 sur les figures 6 et 7. Dans la position basse de vidange représentée sur la figure 6, la dépression créée par le flux liquide aspire de l'air qui évacue les dépôts éventuels, tandis que dans la position haute de repos représentée sur la figure 7, le liquide résiduel est vidangé sous l'effet de la pression hydrostatique, ce qui permet également d'éviter tout phénomène de pulsation en fin de cycle d'alimentation.

Dans l' autre variante de réalisation représentée sur la figure 8, le déplacement angulaire du tube 1 est limité à environ 75°, grâce à un guide 20 de conception particulière, représenté en détail sur la figure 9. De plus, il n'y a que trois sorties de vidange, respectivement 21, 22 et 23.

Le tube 1 coopère avec le guide 20 par l'intermédiaire d'un plot 24 dont il est solidaire. Au départ, le tube se trouve en position haute de repos avec le plot en appui dans la position indiquée 25. Une première alimentation en liquide fait passer le plot 24 de la position 25 à la position basse 26, ce qui correspond à la vidange du tube par la sortie 21. En fin d'alimentation, le plot 24 remonte dans la position 27 et une nouvelle alimentation le conduit dans la position basse 28, ce qui correspond à la vidange du tube par la sortie 22.

En fin d'alimentation, le plot 24 remonte dans la position 29 et une nouvelle alimentation le fait passer dans la position basse 30 qui correspond à la vidange du tube par la sortie 23.

En fin d'alimentation, le plot 24 passe automatiquement de la position 30 à la position de départ 25 pour un nouveau cycle de fonctionnement.

Grâce à cette disposition, le liquide peut être envoyé de façon simple dans trois directions différentes correspondant par exemple à trois zones d'épandage distinctes.

## Revendications

1.  Dispositif pour répartir un liquide dans au moins deux directions, caractérisé en ce qu'il comprend un tube réservoir (1) à vidange unilatérale, alimenté en liquide (7) par un avaloir (8) et qui est monté mobile à la fois verticalement (2) et horizontalement (3), ledit tube étant normalement maintenu dans une position haute par un lest (6) dont l'effet s'annule sous l'action du poids de liquide remplissant le tube, ce qui provoque son basculement en position basse et sa vidange, des moyens en forme de crémaillère (9, 10) étant prévus pour coopérer avec le tube à chacun de ses basculements afin d'entraîner sa rotation pas à pas dans le plan horizontal.

2.  Dispositif selon la revendication 1, caractérisé en ce qu'il comporte en outre un contrepoids (15) monté mobile autour d'un axe fixe (2) et coopérant avec deux butées (17, 18) solidaires du tube de vidange (1).

3.  Dispositif selon la revendication 1, caractérisé en ce qu'il comporte un système de vidange additionnel de type venturi (19) disposé dans le fond du tube, à l'oppposé de l'orifice de vidange principal (5).

4. Dispositif selon l'une quelconque des revendications 1 à 3, caractérisé en ce que l'angle de rotation du tube de vidange est limité par une position de retour direct à la position de départ.

FIG.1

FIG.2

FIG.3

FIG.4

FIG.5

FIG.6

FIG.7

FIG.8

FIG.9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | SOVIET INVENTIONS ILLUSTRATED Section physique, semaine 8626, 11 juillet 1986, abrégé no. 86-168207/26 S/02, page 14, Derwent Publications Ltd., London, GB; & Su - A - 1193464 (UKR FOREST EDGE ANI) 23.11.1985 * le document en entier * | 1 | G 01 F 11/26 B 67 D 3/00 |
| A | FR-A-2 497 177 (J. ERRARD) * revendications; figures 1,2,4 * | 1 | |

DOMAINES TECHNIQUES RECHERCHES (Int. Cl.5)

A 01 K
B 67 D
G 01 F

Le présent rapport de recherche a été établi pour toutes les revendications

| Lieu de la recherche | Date d'achèvement de la recherche | Examinateur |
|---|---|---|
| Berlin | 24 février 91 | VORROPOULOS G |